# EUROPÄISCHE PATENTSCHRIFT

(11) **EP 3 293 059 B1**
(45) Veröffentlichungstag und Bekanntmachung des Hinweises auf die Patenterteilung: **20.03.2019**
(21) Anmeldenummer: 17175642.2
(22) Anmeldetag: 13.06.2017
(51) Int. Cl.: B60R 22/22, A61G 3/08

(54) **RÜCKHALTEVORRICHTUNG UND ROLLSTUHLRÜCKHALTESYSTEM MIT EINER DERARTIGEN RÜCKHALTEVORRICHTUNG**
RESTRAINING DEVICE AND WHEELCHAIR RESTRAINT SYSTEM WITH SUCH A RESTRAINING DEVICE
DISPOSITIF DE RETENUE ET SYSTÈME DE RETENUE DE FAUTEUIL ROULANT COMPRENANT UN TEL DISPOSITIF DE RETENUE

(30) Priorität: 13.09.2016 DE 102016117179
(43) Veröffentlichungstag der Anmeldung: 14.03.2018
(73) Patentinhaber: Hermann Schnierle GmbH, 86368 Gersthofen (DE)
(72) Erfinder: Schnierle, Martin, 86153 Augsburg (DE)
(74) Vertreter: Charrier Rapp & Liebau

(56) Entgegenhaltungen:
- EP-A1- 2 042 143
- DE-A1- 3 229 260
- JP-A- 2009 101 125
- US-A- 3 494 571

## Beschreibung

Die Erfindung betrifft eine Rückhaltevorrichtung und ein Rollstuhlrückhaltesystem mit einer derartigen Rückhaltevorrichtung.

Für den Transport auf Rollstühlen sitzender Personen müssen innerhalb der Fahrzeuge besondere Sicherheitsvorkehrungen getroffen werden, um eine sichere Befestigung der Rollstühle innerhalb der Fahrzeuge zu gewährleisten. Die Halterung der Rollstühle innerhalb der Fahrzeuge erfolgt üblicherweise über Rückhaltevorrichtungen mit einem Gurtband, das auf einem um eine Achse drehbaren Wickelkörper eines am Fahrzeug befestigten Gurtaufrollers oder Retraktors aufgewickelt ist und an seinem freien Ende ein Halteelement zur lösbaren Befestigung des Spanngurts am Rollstuhl aufweist. Zur Halterung des Rollstuhls kann das Gurtband von dem Wickelkörper abgewickelt und mit seinem Haltelement an dem Rollstuhl zum anschließenden Spannen befestigt werden. In der Regel werden die Rollstühle über zwei an der Vorderseite und zwei an der Rückseite des Rollstuhls befestigte Gurtbänder fixiert. Eine derartige Rückhaltevorrichtung ist aus der DE 20 2010 001 972 U1 bekannt.

Bei sogenannten Heckausschnittfahrzeugen, die für die Beförderung eines Rollstuhls in einer Heckwanne des Fahrzeugs ausgelegt sind, kann sich jedoch ein Problem mit derartigen Rückhaltevorrichtungen ergeben. Der Rollstuhl kann dann zwar bei geöffneter Heckklappe über eine einfach aus- und einklappbare Auffahrrampe bequem in die Heckwanne eingeschoben werden, allerdings sind dann die in Fahrtrichtung gesehen vorderen Gurtbänder zum Verzurren des Rollstuhls entweder gar nicht oder nur sehr schlecht zugänglich.

Es gibt auch bereits Rollstuhlrückhaltesysteme, bei denen an der Innenseite des Fahrzeugs Gurtaufroller mit einer großen Bandkapazität und blockierbaren Wickelkörpern angeordnet sind. Hier sind auf den Wickelkörpern der beiden in Fahrrichtung gesehen vorderen Gurtaufroller bis zu 4 m lange Gurtbänder aufgewickelt. Die in Fahrtrichtung gesehen vorderen Gurtbänder können so aus dem Fahrzeug herausgezogen und an der Vorderseite des noch außerhalb des Fahrzeugs befindlichen Rollstuhls befestigt werden. Dann kann der Rollstuhl über eine Rampe in das Fahrzeug geschoben werden, wobei die Gurtbänder der vorderen Gurtaufroller mittels Federkraft eingezogen und wieder auf die Wickelkörper aufgewickelt werden. Wenn sich der Rollstuhl an seinem vorgesehenen Platz innerhalb des Fahrzeugs befindet, können die Wickelkörper über einen elektrischen Stellantrieb oder einen Bowdenzug blockiert werden. Anschließend kann der Rollstuhl an seiner einfacher zugänglichen Rückseite mit herkömmlichen Retraktoren gesichert und gespannt werden. Bei derartigen Rollstuhlrückhaltesystemen ist jedoch auf den Wickelkörpern der in Fahrtrichtung gesehen vorderen Gurtaufroller in der Haltestellung eine relativ große Länge des Gurtbands aufgewickelt. Trotz Blockierung des Wickelkörpers kann dies bei einer entsprechenden Zugbelastung des Gurtbandes zu unerwünscht großen Gurtdehnungen führen. Bei Gurtlängen von 4 m kann z.B. die Gurtdehnung bereits 30 bis 40 cm betragen. Eine derartige Gurtdehnung kann aber besonders im Falle eines Heckaufpralls aber auch bei der Rückwärtsbewegung des Rollstuhls im Falle eines Frontaufpralls zu ungewünschten Rollstuhlbewegungen und dadurch bedingten Verletzungen führen.

Aus der JP 2009 101125 A ist eine Rückhaltevorrichtung nach dem Oberbegriff des Patentanspruchs 1 bekannt. Diese enthält ein Gurtband, das auf einem um eine Achse drehbaren Wickelkörper eines an einem Fahrzeug befestigbaren Gurtaufrollers aufgewickelt ist und an seinem freien Ende ein hakenförmiges Halteelement zur Befestigung an einem zu haltenden Gegenstand aufweist. Zwischen dem Gurtaufroller und dem hakenförmigen Halteelement ist eine Halteeinrichtung zur Fixierung des Gurtbands zwischen dem Gurtaufroller und dem Halteelement angeordnet.

Aufgabe der Erfindung ist es , eine Rückhaltevorrichtung und ein Rollstuhlrückhaltesystem zu schaffen, die auch bei schlecht zugänglichen Heckausschnittfahrzeugen eine einfach betätigbare und sichere Halterung eines Rollstuhls ermöglichen.

Diese Aufgabe wird durch eine Rückhaltevorrichtung mit den Merkmalen des Anspruchs 1 und durch ein Rollstuhlrückhaltesystem mit den Merkmalen des Anspruchs 9 gelöst. Zweckmäßige Weiterbildungen und vorteilhafte Ausgestaltungen der Erfindung sind in den Unteransprüchen angegeben.

Bei der erfindungsgemäßen Rückhaltevorrichtung ist zwischen dem Gurtaufroller oder Retraktor und dem am freien Ende des Gurtbands angeordneten Halteelement eine Halteeinrichtung zur Fixierung des Gurtbands zwischen dem Retraktor und dem Halteelement angeordnet ist. Die Halteeinrichtung enthält ein zwischen einer Lösestellung und einer Haltestellung bewegbares Arretierelement, das in der Haltestellung ein am Gurtband befestigtes Halteteil fixiert. Durch diese Halteinrichtung kann das Gurtband außerhalb des Retraktors fixiert werden, sodass sich bei einer Zugbelastung nur noch der zwischen der Halteeinrichtung und dem Halteelement liegende Teil des Gurtbands dehnen kann.

Die Halteeinrichtung ist zweckmäßigerweise in Auszugsrichtung des Gurtbands hinter einer Gurtaustrittsöffhung eines Gehäuses des Gurtaufrollers oder Retraktors angeordnet.

Das Arretierelement kann zweckmäßigerweise über das Gurtband oder über einen von der Ferne z.B. elektrisch oder über einen Bowdenzug betätigbaren Stellantrieb zwischen der Lösestellung und Haltestellung bewegbar sein. Dadurch kann die Halteeinrichtung auch bei einem schlechten Zugang betätigt werden. Der Stellantrieb kann z.B. ein Stellmotor oder ein von der Ferne betätigbarer mechanischer Stellmechanismus mit einem Auslöse- oder Betätigungshebel sein.

Das Arretierelement kann an einem Träger verschiebbar oder schwenkbar angeordnet sein. Durch eine zusätzliche Verriegelung kann ein unerwünschtes Lösen des Arretierelements verhindert werden.

Die Erfindung betrifft außerdem ein Rollstuhlrückhaltesystem mit zwei in Fahrtrichtung gesehen vorderen Rückhaltevorrichtungen und zwei in Fahrrichtung gesehen hinteren Rückhaltevorrichtungen zur Halterung eines Rollstuhls innerhalb eines Fahrzeugs, wobei zumindest die vorderen Rückhaltevorrichtungen in der vorstehend beschriebenen Weise ausgebildet sind.

Weitere Besonderheiten und Vorzüge ergeben sich aus der folgenden Beschreibung bevorzugter Ausführungsbeispiele anhand der Zeichnungen.

Es zeigen:
- **Figur 1**: ein Rollstuhlrückhaltesystem mit mehreren Rückhaltevorrichtungen in einer Seitenansicht;
- **Figur 2**: das in Figur 1 gezeigte Rollstuhlrückhaltesystem in einer Draufsicht;
- **Figur 3**: ein erstes Ausführungsbeispiel einer Rückhaltevorrichtung in einer Draufsicht;
- **Figur 4**: die in Figur 3 gezeigte Rückhaltevorrichtung in einer Seitenansicht;
- **Figur 5**: eine Schnittansicht der Rückhaltevorrichtung von Figur 3 mit einer Halteeinrichtung in einer Lösestellung;
- **Figur 6**: eine Schnittansicht der Rückhaltevorrichtung von Figur 3 mit einer Halteeinrichtung in einer Haltestellung;
- **Figur 7**: ein erfindungsgemäßes Ausführungsbeispiel einer Rückhaltevorrichtung mit einer Halteeinrichtung in einer Lösestellung;
- **Figur 8**: die Rückhaltevorrichtung von Figur 8 mit der Halteeinrichtung in einer Haltestellung;
- **Figur 9**: ein weiteres Ausführungsbeispiel einer Rückhaltevorrichtung mit einer weiteren Halteeinrichtung in einer Draufsicht;
- **Figur 10**: eine Schnittansicht der Rückhaltevorrichtung von Figur 9 mit der Halteeinrichtung in einer Lösestellung;
- **Figur 11**: eine Schnittansicht der Rückhaltevorrichtung von Figur 9 mit der Halteeinrichtung in einer Haltestellung;
- **Figur 12**: ein weiteres Ausführungsbeispiel einer Rückhaltevorrichtung mit einer weiteren Halteeinrichtung in einer Seitenansicht;
- **Figur 13**: eine Schnittansicht der Rückhaltevorrichtung von Figur 12 mit der Halteeinrichtung in einer Lösestellung;
- **Figur 14**: eine Schnittansicht der Rückhaltevorrichtung von Figur 12 mit der Halteeinrichtung in einer Haltestellung;
- **Figur 15**: ein weiteres Ausführungsbeispiel einer Rückhaltevorrichtung mit einer weiteren Halteeinrichtung in einer Draufsicht;
- **Figur 16**: eine Schnittansicht der Rückhaltevorrichtung von Figur 15 mit der Halteeinrichtung in einer Lösestellung und
- **Figur 17**: eine Schnittansicht der Rückhaltevorrichtung von Figur 15 mit der Halteeinrichtung in einer Haltestellung.

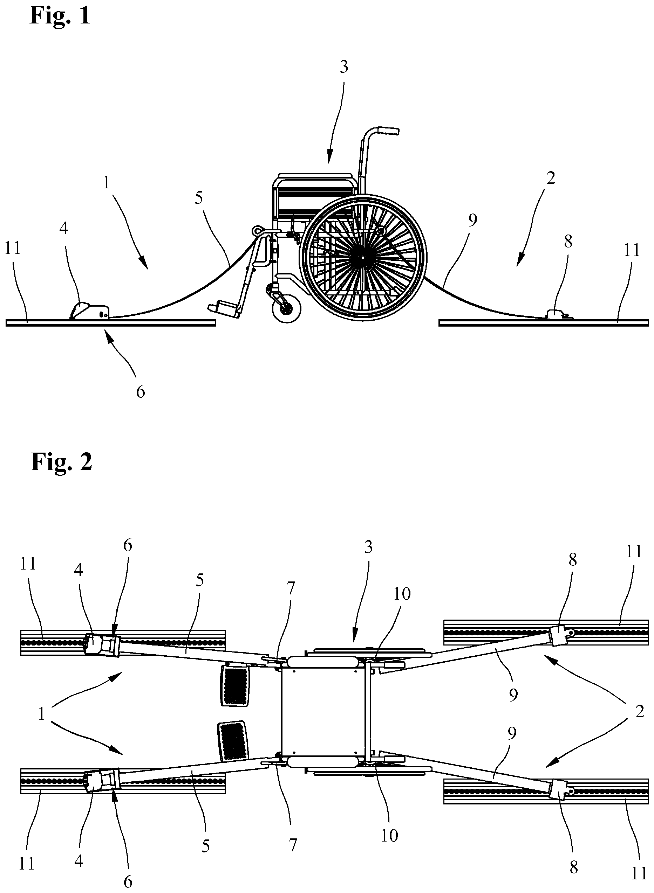

In den Figuren 1 und 2 ist schematisch ein Rollstuhlrückhaltesystem mit zwei in Fahrtrichtung gesehen vorderen Rückhaltevorrichtungen 1 und zwei in Fahrrichtung gesehen hinteren Rückhaltevorrichtungen 2 zur Halterung einer Rollstuhls 3 innerhalb eines Fahrzeugs in einer Seitenansicht und einer Draufsicht gezeigt. Die im Folgenden noch näher beschriebenen vorderen Rückhaltevorrichtungen 1 weisen neben einem Gurtaufroller bzw. Retraktor 4 mit einem darauf aufgewickelten Gurtband 5 eine zusätzliche Halteeinrichtung 6 zur Fixierung des Gurtbands 5 zwischen dem Retraktor 4 und einem am freien Ende des Gurtbands 5 angeordneten Halteelement 7 auf. Das Halteelement 7 ist bei der gezeigten Ausführung als Haken zur lösbaren Befestigung des Gurtbands 5 an dem Rollstuhl 3 ausgeführt. Die hinteren Rückhaltevorrichtungen 2 weisen ein über ein Spannschloss bzw. einen Spannretraktor 8 spannbares Gurtband 9 auf. Auch an den freien Enden der Gurtbänder 9 der hinteren Rückhaltevorrichtungen 2 sind hakenförmige Halteelemente 10 zur lösbaren Befestigung an dem Rollstuhl 3 vorgesehen. Die Spannretraktoren 8 der beiden hinteren Rückhaltevorrichtungen 2 und die Retraktoren 4 der beiden vorderen Rückhaltevorrichtungen 1 sind zusammen mit den Halteeinrichtungen 6 an jeweils zueinander parallelen, fest am Fahrzeug angeordneten Halteschienen 11 befestigt.

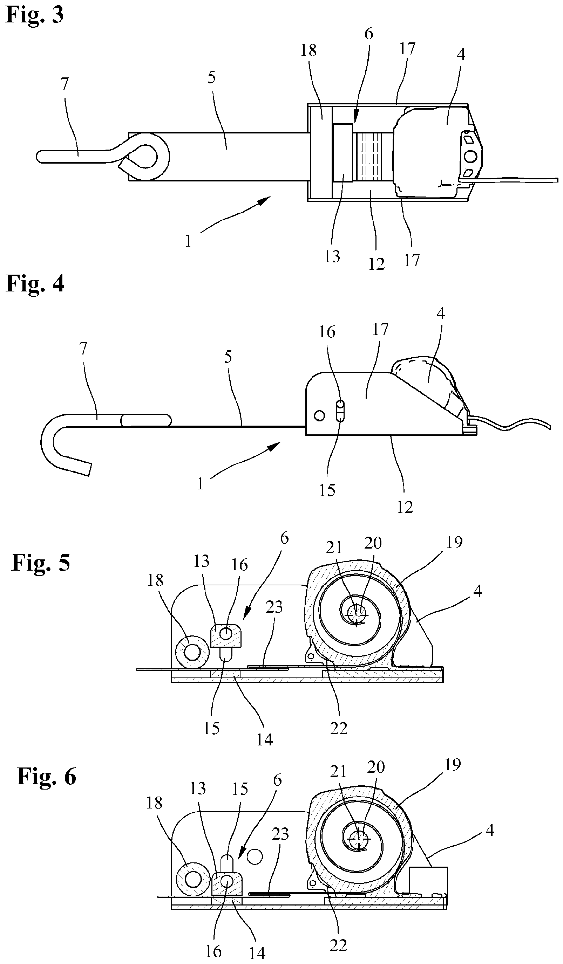

In den Figuren 3 bis 6 ist ein erstes Ausführungsbeispiel einer vorderen Rückhaltevorrichtung 1 mit einem Gurtaufroller bzw. Retraktor 4 und einer zwischen dem Retraktor 4 und dem Halteelement 7 angeordneten Halteeinrichtung 6 zur Fixierung des Gurtbands 5 in verschiedenen Ansichten gezeigt. Bei dieser Ausführung ist der Gurtaufroller bzw. Retraktor 4 auf einem im Querschnitt U-förmigen Träger 12 befestigt. Die Halteeinrichtung 6 enthält bei dieser Ausführung einen an dem Träger 12 verschiebbar geführten Klemmkörper 13, der durch einen hier nicht dargestellten Stellmechanismus zwischen einer in Figur 5 dargestellten angehobenen Lösestellung und einer in Figur 6 gezeigten abgesenkten Haltestellung bewegt werden kann. Der Klemmkörper 13 ist als Klemmstück zum Andrücken des Gurtbands 5 gegen ein festes Auflageteil 14 ausgeführt. In der abgesenkten Haltestellung wird das Gurtband 5 zwischen dem Klemmkörper 13 und dem unteren Auflageteil 14 am Boden des U-förmigen Trägers 12 festgeklemmt.

Der in Figur 3 erkennbare Klemmkörper 13 ist über in Figur 4 gezeigte Langlöcher 15 und entsprechende Führungsstifte 16 in den beiden Seitenwangen 17 des U-förmigen Trägers 12 quer zu dem in den Figuren 5 und 6 gezeigten unteren Auflageteil 14 am Boden des U-förmigen Trägers 12 verschiebbar geführt. Zwischen den beiden Seitenwangen 17 des U-förmigen Trägers 12 ist außerdem in Auszugsrichtung des Gurtbandes gesehen hinter dem Klemmkörper 13 eine Umlenkrolle 18 drehbar gelagert.

Wie aus den Figuren 5 und 6 hervorgeht, enthält der Gurtaufroller bzw. Retraktor 4 ein Gehäuse 19, in dem ein Wickelkörper 20 um eine Achse 21 drehbar gelagert ist. Über eine schlitzförmige Gurtaustrittsöffhung 22 im Gehäuse 19 wird das Gurtband 5 nach außen geführt. Die Halteeinrichtung 6 mit dem Klemmkörpers 13 ist in Auszugsrichtung des Gurtbands 5 hinter der Gurtaustrittsöffnung 22 angeordnet. Das Gurtband 5 ist auf den in Einzugsrichtung durch eine Feder vorgespannten Wickelkörper 20 aufgewickelt und kann durch Ziehen entgegen der Kraft der Feder aus dem Gehäuse 19 herausgezogen und mit seinem am freien Ende vorgesehenen Halteelement 8 an dem noch außerhalb des Fahrzeugs befindlichen Rollstuhl 3 befestigt werden. Dann kann der Rollstuhl 3 über eine Rampe in das Fahrzeug geschoben werden, wobei das Gurtband 5 des Retraktors 4 mittels Federkraft in das Gehäuse 19 eingezogen und wieder auf den Wickelkörper 20 aufgewickelt wird. Wenn sich der Rollstuhl 3 an seinem vorgesehenen Platz innerhalb des Fahrzeugs befindet, kann der Klemmkörper 13 über einen elektrischen Stellantrieb oder einen Bowdenzug in die abgesenkte Haltestellung bewegt werden. Dadurch wird sichergestellt dass sich bei einer Zugbelastung des Gurtbands 5 nur noch der zwischen dem Klemmkörper 13 und dem hakenförmigen Halteelement 7 liegende Teil des Gurtbands 5 dehnen kann, wodurch die Gurtlängung erheblich verringert wird.

Zur Erhöhung der Sicherheit gegen ein Durchrutschen des Gurtbands 5 an dem in die Haltestellung abgesenkten Klemmkörper 13 kann an dem Gurtband 5 ein Anschlagelement 23 vorgesehen sein, das bei einer durch Zugbelastung bedingten Weiterbewegung des Gurtbands 5 an dem in der Haltestellung befindlichen Klemmkörper 13 zur Anlage gelangt. Bei der in Figur 5 und 6 gezeigten Ausführung wird das Anschlagelement 23 durch eine mittels Umschlagen, Zusammenlegen und Vernähen des Gurtbands 5 gebildete Verdickung des Gurtbands 5 erreicht. Bei diesem System kann auf eine starke Verklemmung des Gurtbandes 5 verzichtet werden, da die 3-fache Materialdicke schon durch leichtes Verklemmen ausreichend blockiert. Das Anschlagelement 23 kann aber auch durch einen in das Gurtband 5 eingenähten Anschlagbolzen, eine am Gurtband 5 befestigte Anschlagplatte oder ein anderes am Gurtband 5 befestigtes Halteelement gebildet sein.

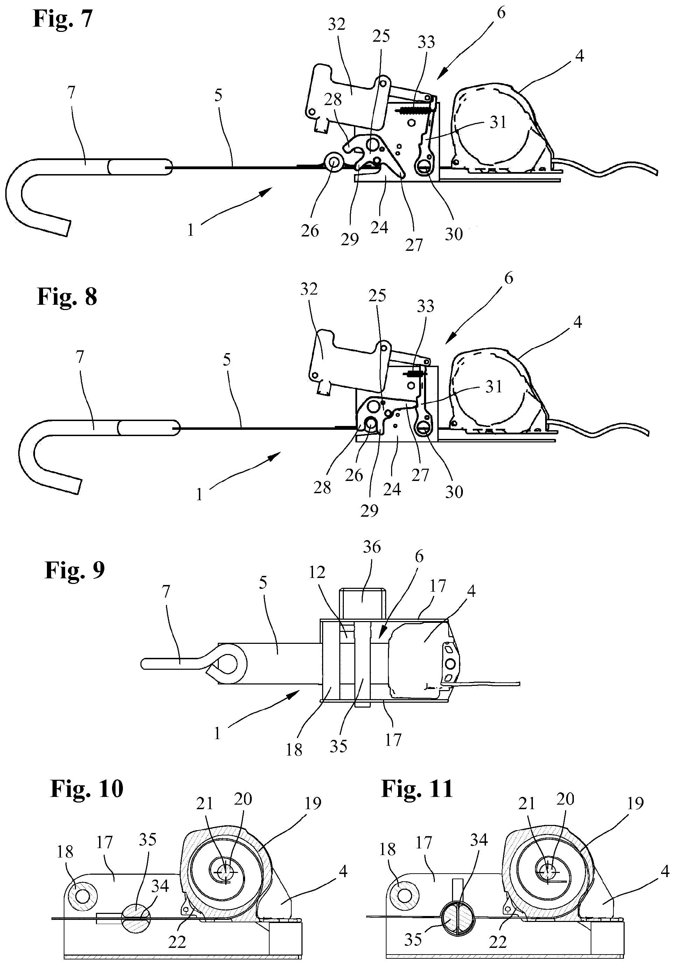

In den Figuren 7 und 8 ist ein erfindungsgemäßes Ausführungsbeispiel einer in Fahrtrichtung gesehen vorderen Rückhaltevorrichtung 1 mit einem Gurtaufroller bzw. Retraktor 4 und einer zwischen dem Retraktor 4 und dem Halteelement 7 angeordneten weiteren Halteeinrichtung 6 zur Fixierung des Gurtbands 5 gezeigt. Bei dieser Ausführung enthält die Halteeinrichtung 6 ein an einem Träger 24 drehbar gelagertes und zwischen einer Lösestellung und einer Haltestellung bewegliches Arretierelement 25, das in der Haltestellung ein am Gurtband 5 befestigtes Halteteil 26 fixiert. In der gezeigten Ausführung ist das Arretierelement 25 als Halteklinke ausgebildet, die eine hintere Verriegelungsnase 27 und ein mit dem bolzenförmigen Halteteil 26 in Eingriff gelangendes, gabelförmiges Arretierteil mit einer vorderen und hinteren Haltenase 28 bzw. 29 enthält. Das Arretierelement 25 ist derart gelagert, dass das z.B. in das Gurtband 5 eingenähte bolzenförmige Halteteil 26 bei Herausziehen des Gurtbands 5 aus dem Retraktor 4 zur Anlage an der vorderen Haltenase 28 gelangt und bei weiteren Herausziehen das Arretierelement 25 in die nach oben geschwenkte Lösestellung bewegt. Wenn dagegen das Gurtband 5 eingezogen wird und in eine vorgegebene Haltestellung gelangt, wird das Arretierelement 25 über das zur Anlage an der hinteren Haltenase 29 kommende bolzenförmige Halteteil 26 in die abgesenkte Arretierstellung gedrückt.

An dem Träger 23 ist außerdem ein um eine Achse 30 schwenkbarer Arretierhebel 31 angeordnet, der durch einen Stellmotor 32 in eine in Figur 7 gezeigte Entriegelungsstellung bewegbar ist und durch eine Rückstellfeder 33 in eine in Figur 8 gezeigte Verriegelungsstellung gezogen wird. In der Verriegelungsstellung gelangt der Arretierhebel 31 in verrastenden Eingriff mit der Verriegelungsnase 27 des Arretierelements 25, so dass das Arretierelement 25 in der Verriegelungsstellung gehalten und eine unerwünschte Bewegung des Arretierelements 25 in die Lösestellung verhindert wird. Wird dagegen der Arretierhebel 31 über den Stellmotor 32 in die Entriegelungsstellung bewegt, kann das Arretierelement 25 durch Herausziehen des Gurtbands 5 in die Lösestellung bewegt werden.

Bei einer in den Figuren 9 bis 11 gezeigten Rückhaltevorrichtung 1 weist die Haltevorrichtung 6 ein Klemmelement 35 in Form einer mit einem Durchgangsschlitz 34 versehenen Welle auf. Das wellenförmige Klemmelement 35 ist zwischen den beiden Seitenwangen 17 eines U-förmigen Trägers 12 drehbar gelagert und durch einen Stellmotor 36 um 90° zwischen einer in Figur 10 gezeigten Lösestellung und einer in Figur 11 gezeigten Haltestellung bewegbar ist. In der Lösestellung von Figur 10 ist der Durchgangsschlitz 34 mit dem durchgeführten Gurtband 5 parallel zur Auszugsrichtung des Gurtbands 5 angeordnet. Wenn das Klemmelement 35 um 90° gedreht wird, wird das Gurtband 5 durch Klemmung fixiert. Auch bei dieser Ausführung ist die Halteeinrichtung 6 in Auszugsrichtung des Gurtbands 5 hinter einer Gurtaustrittsöffhung 22 eines Gehäuses 19 des Gurtaufrollers bzw. Retraktors 4 angeordnet.

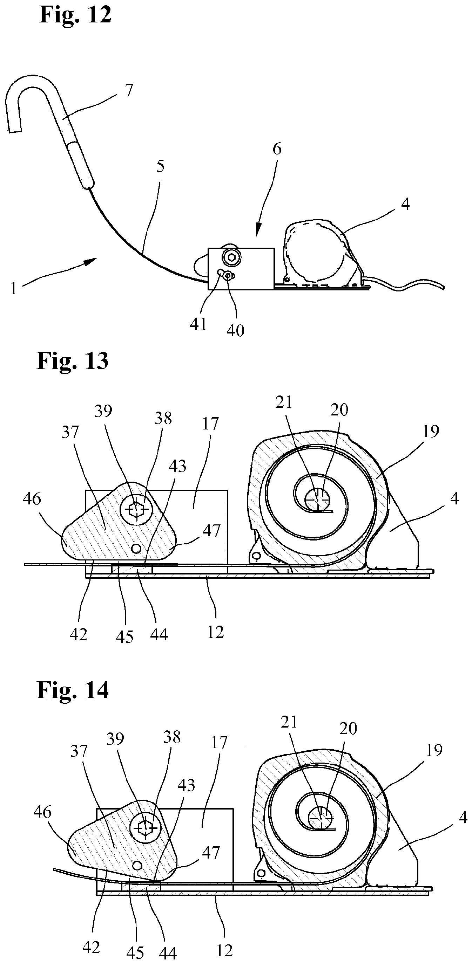

In den Figuren 12 bis 14 ist eine weitere Rückhaltevorrichtung 1 mit einer alternativen Halteeinrichtung 6 zur Fixierung des Gurtbands 5 gezeigt. Die hier gezeigte Halteeinrichtung 6 enthält einen exzentrisch gelagerten, dreieckigen Klemmkörper 37 der zwischen zwei Seitenwangen 17 eines Trägers 12 über zwei seitliche Bolzen 38 um eine Querachse 39 schwenkbar angeordnet ist. Über seitliche Führungsbolzen 40 und entsprechende bogenförmige Langlöcher 41 in den Seitenwangen 17 ist der Klemmkörper 37 zwischen einer in Figur 13 gezeigten Lösestellung und einer in Figur 14 gezeigten Haltestellung schwenkbar geführt. Der Klemmkörper 37 ist derart gelagert, dass er durch sein Eigengewicht in die in Figur 13 gezeigte Lösestellung bewegt wird. In dieser Lösestellung ist zwischen einer unteren Klemmfläche 42 des Klemmkörpers 37 und einer oberen Klemmfläche 43 eines Auflageteils 44 am Boden des Trägers 12 ein paralleler Spalt 45 zum Durchziehen des Gurtbands 5 vorgesehen. Wenn das Gurtband 5 parallel zu dem Spalt 45 aus dem Retraktor 4 herausgezogen wird, bleibt der Klemmkörper 37 in der Lösestellung und das Gurtband 5 wird nicht geklemmt.

Wird das Gurtband 5 dagegen zur Befestigung am Rollstuhl gemäß Figur 12 schräg nach oben geführt, wird der Klemmkörper 37 über seine in Zugrichtung gesehen vordere Ecke 46 so geschwenkt, dass sich die hintere Ecke 47 gemäß Figur 14 in Richtung des Auflageteils 44 bewegt und das Gurtband 5 zwischen dem Klemmkörper 37 und dem Auflageteil 44 klemmt. Auch bei dieser Ausführung ist der Klemmkörper 37 als Klemmstück zum Andrücken des Gurtsbands 5 gegen das Auflageteil 44 ausgeführt. Bei dieser Ausführung wird die Klemmwirkung mit zunehmender Zugkraft verstärkt. Durch einen Anschlag kann ein Abquetschen des Gurtbands 5 verhindert werden. Zur Verbesserung der Klemmwirkung kann die Klemmfläche 42 des Klemmkörpers 37 und/oder die Klemmfläche 43 des Auflageteils 44 aufgeraut oder mit einer Reibbeschichtung versehen sein. Außerdem könnte die Verklemmung über den Klemmkörper 37 mit Hilfe eines Servomotors unterstützt werden.

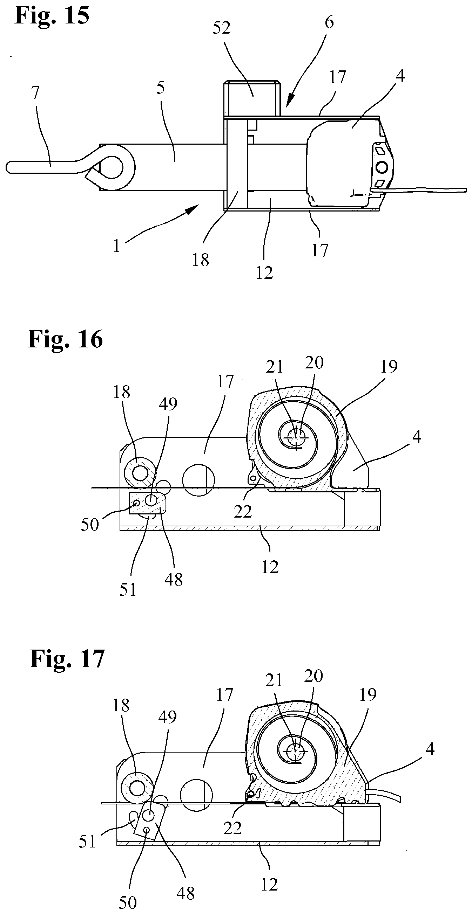

Auch bei der in den Figuren 15 bis 17 gezeigten Ausführung 6 ist ein Klemmkörper 48 zwischen zwei Seitenwangen 17 eines Trägers 12 um einen Querachse 49 schwenkbar angeordnet ist. Über seitliche Führungsbolzen 50 und entsprechende bogenförmige Langlöcher 51 in den Seitenwangen 17 ist der Klemmkörper 48 zwischen einer in Figur 16 gezeigten Lösestellung und einer in Figur 17 gezeigten Haltestellung schwenkbar geführt. Die Bewegung des mit einer rauen Oberfläche oder einer Verzahnung versehenen Klemmkörpers 48 kann durch einen in Figur 15 gezeigten Stellantrieb 52 erfolgen und durch eine Feder verstärkt werden.

### Bezugszeichenliste

- 1: Vordere Rückhaltevorrichtung
- 2: Hintere Rückhaltevorrichtung
- 3: Rollstuhl
- 4: Gurtabroller bzw. Retraktor
- 5: Gurtband
- 6: Halteeinrichtung
- 7: Halteelement
- 8: Spannretraktor
- 9: Gurtband
- 10: Halteelement
- 11: Halteschiene
- 12: Träger
- 13: Klemmkörper
- 14: Auflageteil
- 15: Langloch
- 16: Führungsstift
- 17: Seitenwangen
- 18: Umlenkrolle
- 19: Gehäuse
- 20: Wickelkörper
- 21: Achse
- 22: Gurtaustrittsöffhung
- 23: Anschlagelement
- 24: Träger
- 25: Arretierelement
- 26: Halteteil
- 27: Verriegelungsnase
- 28: Vordere Haltenase
- 29: Hintere Haltenase
- 30: Achse
- 31: Arretierhebel
- 32: Stellmotor
- 33: Rückstellfeder
- 34: Durchgangsschlitz
- 35: Welle
- 36: Stellmotor
- 37: Klemmkörper
- 38: Bolzen
- 39: Querachse
- 40: Führungsbolzen
- 41: Langloch
- 42: Untere Klemmfläche
- 43: Obere Klemmfläche
- 44: Auflageteil
- 45: Spalt
- 46: Vordere Ecke
- 47: Hintere Ecke
- 48: Klemmkörper
- 49: Querachse
- 50: Führungsbolzen
- 51: Langloch
- 52: Stellmotor

## Patentansprüche

1. Rückhaltevorrichtung (1) mit einem Gurtband (5), das auf einem um eine Achse (21) drehbaren Wickelkörper (20) eines an einem Fahrzeug befestigbaren Gurtaufrollers oder Retraktors (4) aufgewickelt ist und an seinem freien Ende ein Halteelement (7) zur lösbaren Befestigung des Gurtbandes (5) an einem Rollstuhl (3) oder einem anderen zu haltenden Gegenstand aufweist, wobei zwischen dem Gurtaufroller oder Retraktor (4) und dem am freien Ende des Gurtbands (5) angeordneten Halteelement (7) eine Halteeinrichtung (6) zur Fixierung des Gurtbands (5) zwischen dem Retraktor (4) und dem Halteelement (7) angeordnet ist, **dadurch gekennzeichnet, dass** die Halteeinrichtung (6) ein zwischen einer Lösestellung und einer Haltestellung bewegbares Arretierelement (25) enthält, das in der Haltestellung ein am Gurtband (5) befestigtes Halteteil (26) fixiert.

2. Rückhaltevorrichtung (1) nach Anspruch 1, **dadurch gekennzeichnet, dass** die Halteeinrichtung (6) in Auszugsrichtung des Gurtbands (5) hinter einer Gurtaustrittsöffhung (22) eines Gehäuses (19) des Gurtaufrollers oder Retraktors (4) angeordnet ist.

3. Rückhaltevorrichtung (1) nach Anspruch 1 oder 2, **dadurch gekennzeichnet, dass** das Arretierelement (25) über das Gurtband (5) oder über einen von der Ferne betätigbaren Stellantrieb (36; 52) zwischen der Lösestellung und Haltestellung bewegbar ist.

4. Rückhaltevorrichtung (1) nach einem der Ansprüche 1 bis 3, **dadurch gekennzeichnet, dass** das Arretierelement (25) an einem Träger (12; 24) verschiebbar oder schwenkbar angeordnet ist.

5. Rückhaltevorrichtung (1) nach einem der Ansprüche 1 bis 4, **dadurch gekennzeichnet, dass** das Arretierelement (25) ein mit dem Halteteil (26) in Eingriff gelangendes Arretierteil mit einer vorderen und hinteren Haltenase (28, 29) enthält.

6. Rückhaltevorrichtung (1) nach Anspruch 5, **dadurch gekennzeichnet, dass** das Arretierelement (25) eine Verriegelungsnase (27) zum verriegelnden Eingriff mit einem Arretierhebel (31) enthält.

7. Rückhaltevorrichtung (1) nach Anspruch 6, **dadurch gekennzeichnet, dass** der Arretierhebel (31) über eine Rückstellfeder (33) in eine Verriegelungsstellung zum verriegelnden Eingriff mit der Verriegelungsnase (27) gedrückt und über einen Stellmotor (32) in eine Entriegelungsstellung bewegbar ist.

8. Rückhaltevorrichtung (1) nach einem der Ansprüche 4 bis 7, **dadurch gekennzeichnet, dass** der Gurtaufroller oder Retraktor (4) an dem Träger (12; 24) befestigt ist.

9. Rollstuhlrückhaltesystem mit zwei in Fahrtrichtung gesehen vorderen Rückhaltevorrichtungen (1) und zwei in Fahrrichtung gesehen hinteren Rückhaltevorrichtungen (2) zur Halterung eines Rollstuhls (3) innerhalb eines Fahrzeugs, **dadurch gekennzeichnet, dass** zumindest die vorderen Rückhaltevorrichtungen (1) nach einem der Ansprüche 1 bis 8 ausgebildet sind.

## Claims

1. Restraint device (1) with a belt strap (5) which is wound on a winding body (20), which can be rotated about an axis (21), of a belt winder or retractor (4) which can be attached to a vehicle and has at its free end, a holding element (7) for releasable attachment of the belt strap (5) to a wheelchair (3) or another object to be held, wherein a holding device (6) for fixing the belt strap (5) between the retractor (4) and the holding element (7) is arranged between the belt winder or retractor (4) and the holding element (7) arranged on the free end of the belt strap (5), **characterised in that** the holding device (6) contains a locking element (25) which can be moved between a release position and a holding position and which fixes a holding part (26) attached to the belt strap (5) in the holding position.

2. Restraint device (1) according to claim 1, **characterised in that** the holding device (6) is arranged in the direction of extension of the belt strap (5) behind a belt outlet opening (22) of a housing (19) of the belt winder or retractor (4).

3. Restraint device (1) according to claim 1 or 2, **characterised in that** the locking element (25) can be moved between the release position and holding position via the belt strap (5) or via an actuating drive (36; 52) which can be actuated remotely.

4. Restraint device (1) according to one of claims 1 to 3, **characterised in that** the locking element (25) is arranged to be displaceable or pivotable on a support (12; 24).

5. Restraint device (1) according to one of claims 1 to 4, **characterised in that** the locking element (25) contains a locking part engaging with the holding part (26) and having a front and rear holding projection (28, 29).

6. Restraint device (1) according to claim 5, **characterised in that** the locking element (25) contains a latching projection (27) for latching engagement with a locking lever (31).

7. Restraint device (1) according to claim 6, **characterised in that** the locking lever (31) is pressed into a latching position for latching engagement with the latching projection (27) via a return spring (33) and can be moved into an unlocking position via a servomotor (32).

8. Restraint device (1) according to one of claims 4 to 7, **characterised in that** the belt winder or retractor (4) is attached to the support (12; 24).

9. Wheelchair restraint system having two front restraint devices (1), seen in the direction of travel, and two rear restraint devices (2), seen in the direction of travel, for holding a wheelchair (3) within a vehicle, **characterised in that** at least the front restraint devices (1) are designed according to one of claims 1 to 8.

## Revendications

1. Dispositif de retenue (1) avec une sangle (5) qui est enroulée sur un corps d'enroulement (20), pouvant tourner autour d'un axe (21), d'un enrouleur de sangle ou rétracteur (4) pouvant être fixé à un véhicule et présente, à son extrémité libre, un élément de retenue (7) pour la fixation amovible de la sangle (5) à un fauteuil roulant (3) ou un autre objet à maintenir, dans lequel, entre l'enrouleur de sangle ou le rétracteur (4) et l'élément de retenue (7) disposé à l'extrémité libre de la sangle (5), un dispositif de retenue (6) est disposé pour la fixation de la sangle (5) entre le rétracteur (4) et l'élément de retenue (7), **caractérisé en ce que** le dispositif de retenue (6) contient un élément d'arrêt (25) pouvant être déplacé entre une position de détachement et une position de retenue qui fixe dans la position de retenue une partie de retenue (26) fixée à la sangle (5).

2. Dispositif de retenue (1) selon la revendication 1, **caractérisé en ce que** le dispositif de retenue (6) est disposé dans le sens d'extraction de la sangle (5) derrière une ouverture de sortie de sangle (22) d'un boîtier (19) de l'enrouleur de sangle ou du rétracteur (4).

3. Dispositif de retenue (1) selon la revendication 1 ou 2, **caractérisé en ce que** l'élément d'arrêt (25) peut être déplacé, par le biais de la sangle (5) ou par le biais d'un entraînement de réglage (36 ; 52) actionnable à distance, entre la position de détachement et la position de retenue.

4. Dispositif de retenue (1) selon l'une quelconque des revendications 1 à 3, **caractérisé en ce que** l'élément d'arrêt (25) est disposé de manière mobile ou pivotante au niveau d'un support (12 ; 24).

5. Dispositif de retenue (1) selon l'une quelconque des revendications 1 à 4, **caractérisé en ce que** l'élément d'arrêt (25) contient une partie d'arrêt parvenant en prise avec la partie de retenue (26) avec des nez de retenue (28, 29) avant et arrière.

6. Dispositif de retenue (1) selon la revendication 5, **caractérisé en ce que** l'élément d'arrêt (25) contient un nez de verrouillage (27) pour la mise en prise par verrouillage avec un levier d'arrêt (31).

7. Dispositif de retenue (1) selon la revendication 6, **caractérisé en ce que** le levier d'arrêt (31) est pressé, par le biais d'un ressort de rappel (33), dans une position de verrouillage pour la mise en prise par verrouillage avec le nez de verrouillage (27) et peut être déplacé, par le biais d'un moteur de réglage (32), dans une position de déverrouillage.

8. Dispositif de retenue (1) selon l'une quelconque des revendications 4 à 7, **caractérisé en ce que** l'enrouleur de sangle ou le rétracteur (4) est fixé au support (12 ; 24).

9. Système de retenue de fauteuil roulant avec deux dispositifs de retenue avant (1), dans une vue dans le sens de la marche, et deux dispositifs de retenue arrière (2), dans une vue dans le sens de la marche, pour le support d'un fauteuil roulant (3) dans un véhicule, **caractérisé en ce qu'**au moins les dispositifs de retenue avant (1) sont réalisés selon l'une quelconque des revendications 1 à 8.
